# EUROPÄISCHE PATENTSCHRIFT

(11) **EP 1 337 321 B1**
(45) Veröffentlichungstag und Bekanntmachung des Hinweises auf die Patenterteilung: **28.04.2004**
(21) Anmeldenummer: 01942950.5
(22) Anmeldetag: 04.07.2001
(51) Int. Cl.: B01J 8/12, C08G 63/78

(54) **SCHACHTREAKTOR MIT BEGASTEM AUSLAUF-KONUS**
SHAFT REACTOR COMPRISING A GASSED DISCHARGE CONE
REACTEUR EN PUITS A CONE DE DECHARGE GAZE

(30) Priorität: 02.11.2000 DE 10054240
(43) Veröffentlichungstag der Anmeldung: 27.08.2003
(73) Patentinhaber: Bühler AG, 9240 Uzwil (CH); Kühnemund, Bernd, 9230 Flawil (CH); Borer, Camille, 8247 Flurlingen (CH)
(72) Erfinder: WAGNER, Viktor, CH-9230 Flawil (CH)
(74) Vertreter: Frommhold, Joachim, Dr.
(86) Internationale Anmeldenummer: PCT/CH2001/000418
(87) Internationale Veröffentlichungsnummer: WO 2002/036255

(56) Entgegenhaltungen:
- FR-A- 918 528
- NL-A- 7 006 398
- US-A- 665 976
- US-A- 3 920 624
- US-A- 4 276 261
- US-A- 4 540 547

## Beschreibung

Die vorliegende Erfindung bezieht sich auf eine Vorrichtung zum thermischen Behandeln bzw. Nachbehandeln von Kunststoffmaterial, insbesondere von Polyestermaterial wie Polyethylen-Terephtalat (PET), gemäss dem Oberbegriff von Anspruch 1.

Schachtreaktoren zur thermischen Nachbehandlung, insbesondere zur Festphasen-Polymerisation von Kunststoffgranulat, sind bekannt. Typischerweise bestehen sie aus einem oberen zylindrischen Bereich und einem sich zum Auslauf des Schachtes verjüngenden unteren Bereich.

Eine für viele Anwendungen wichtige Klasse von Polymer-Kunststoffen sind Polyester, insbesondere z.B. Polyethylen-Terephthalat (PET). Bei ihrer thermischen Nachbehandlung werden die Granulatkörner des Kunststoffs in der Regel zuerst mindestens an ihrer Oberfläche kristallisiert, damit bei der vorwiegend zur Erhöhung des Polymerisationsgrades dienenden weiteren Behandlung die Körner weniger stark zum Verkleben neigen als dies bei dem Ausgangsgranulat aus amorphen Polyesterkörnern der Fall wäre.

Die (Vor-)Kristallisation wird typischerweise in Wirbelbett-Reaktoren durchgeführt, während die anschliessende (Nach-)Polymerisation in fester Phase sowie die weitere Kristallisation der Granulatkörner in einem Schachtreaktor stattfinden. Ziel der Behandlung ist es, durch den zunehmenden Polymerisationsgrad die intrinsische Viskosität des Polymers zu erhöhen.

Bei der Polymerisation durch Veresterung wird für jede Esterbindung ein Wassermolekül freigesetzt, das dem Veresterungsgleichgewicht entzogen werden muss, um zu verhindern, dass die gebildeten Esterbindungen wieder aufgespalten werden.

Um am Auslauf des Schachtreaktors ein möglichst homogenes Polymergranulat zu erhalten, ist es wichtig, dass jedes Granulatkorn ungefähr gleichlang im Schachtreaktor verweilt und dabei alle Granulatkörner in etwa gleichen Reaktionsbedingungen ausgesetzt werden.

Makroskopisch betrachtet handelt es sich eigentlich um eine "Trocknung" des Granulats, wobei die Temperatur und die Feuchtigkeit des Trocknungsgases, wie z.B. Luft oder reiner Stickstoff, über den horizontalen Querschnitt des Schachtreaktors möglichst gleich sein sollten.

Dies erreicht man, indem man das Granulat an möglichst vielen Stellen und möglichst grossflächig begast, während man durch geeignete Einbauten eine Vergleichmässigung des Granulat-Geschwindigkeitsprofils über jeder horizontalen Schnittebene anstrebt.

Die US-4,276,261 offenbart einen Schachtreaktor für die Festphasen-Polymerisation mit einem oberen zylindrischen Teil und unteren konischen Teil. Der obere zylindrische Teil wird im unteren Bereich über seinen gesamten Umfang von ausser her begast, während der untere konische Teil in seinem Innern einen perforierten Doppelkegel ("Lochdiamant") enthält, durch den einerseits eine Vereinheitlichung der Geschwindigkeit des Granulatstroms angestrebt wird und andererseits der konische Auslaufbereich von innen her noch zusätzlich begast wird. Hierdurch wird zwar zu einer Verringerung der Gesamthöhe des Schachtreaktor beigetragen, indem auch der untere Auslaufbereich zur Begasung genutzt wird, doch muss man dafür eine beachtliche Bremswirkung aufgrund des perforierten Doppelkegels in Kauf nehmen. Durch die zur Vertikalen schräg verlaufende perforierte Kegeloberfläche des oberen Kegels kommt es dabei allerdings zu beachtlicher Reibung zwischen der perforierten Kegelfläche (Gitter, Sieb) und dem Granulat. So wird in unmittelbarer Nähe der kegelförmigen Gitter- oder Siebfläche das Granulat stark abgebremst und bewegt sich daher in diesem Bereich nur sehr langsam, wodurch das Verweilzeitspektrum der Granulatkörner stark verbreitert wird. Schlimmstenfalls kann es sogar zum Anbacken von Granulatkörnern am Doppelkegel kommen, dessen Gitter- oder Siebfläche dann mehr oder weniger verstopft wird.

In dem Artikel "Choosing purge vessels for mass transfer", Dale J. Herron, Chemical Engineering, 7. Dezember 1987, Seite 107, werden verschiedene Begasungsvarianten vorgestellt, um nur den oberen zylindrischen Teil des Schachtreaktors zu begasen oder auch zusätzlich den konischen Auslaufbereich unterhalb des zylindrischen Teils zu begasen. Die Begasung des konischen Auslauf erfolgt dabei über eine Perforation der Kegelfläche des Auslaufs ("Lochkonus"). Auch hier zeigt sich, dass man entweder auf die Begasung des konischen Auslaufs verzichten muss oder aber durch die perforierte Kegelfläche zusätzliche Reibung mit den weiter oben erwähnten negativen Folgen akzeptieren muss.

Die NL-A-7 006 398 beschreibt einen Trockner bzw. Schachtreaktor zum Trocknen bzw. Begasen eines körnigen Produkts. Dieser Trockner bzw. Schachtreaktor hat einen im wesentlichen konischen Auslaufbereich aus einem oberen konischen Teilbereich, einen mittleren zylindrischen Teilbereich und einem unteren konischen Teilbereich, die aneinander grenzen, wobei der mittlere zylindrische Teilbereich einen Begasungsbereich zur Begasung des Granulats aufweist. Der Auslaufbereich des Trockners bzw. Schachtreaktors ist von einer sich entlang der Reaktorachse erstreckenden vertikalen Förderschnecke durchsetzt, über die das körnige Produkt von dem unteren konischen Teilbereich in den oberen konischen Teilbereich des Auslaufsbereichs nach oben befördert werden kann.

Die FR- A- 918 528 beschreibt eine Vorrichtung zum Begasen eines körnigen Materials die ebenfalls in ihrem Auslaufbereich einen oberen konischen Teilbereich, einen mittleren zylindrischen Teilbereich und einen unteren konischen Teilbereich aufweist, die aneinander grenzen, wobei der mittlere zylindrische Teilbereich Vorrichtungen zur Begasung des Granulats aufweist. Diese Begasungsvorrichtungen bestehen aus sich horizontal, d.h. senkrecht zur vertikalen Fliessrichtung des Granulats erstreckenden Gittern, die eine möglichst gleichmässige Begasung des körnigen Produktes über seinen gesamten Querschnitt ermöglichen sollen.

Auch die US 4 540 547 beschreibt einen Schachtreaktor, dessen Auslaufbereich einen oberen konischen Teilbereich, einen mittleren zylindrischen Teilbereich und einen unteren konischen Teilbereich aufweist. Auch hier findet die Begasung zur katalytischen Behandlung von Kohlenwasserstoffen, in dem mittleren zylindrischen Teilbereich statt.

Der vorliegenden Erfindung liegt die Aufgabe zugrunde, bei einem Schachtreaktor zur thermischen Nachbehandlung von beispielsweise Polyester-Granulat eine möglichst gleichmässige Begasung im gesamten Schachtvolumen, vor allem aber im konischen Auslaufbereich zu erzielen, ohne dabei eine starke Abbremsung des Granulats an den Schachtinnenwänden der Begasungsbereiche mit den genannten Nachteilen in Kauf nehmen zu müssen.

Diese Aufgabe wird durch die kennzeichnenden Merkmale von Anspruch 1 gelöst.

Durch die einerseits vorgesehene Aufteilung des sich nach unten hin verjüngenden Auslaufbereichs in einen oberen konischen Teilbereich, einen mittleren zylindrischen Teilbereich und einen unteren konischen Teilbereich sowie die Begasung durch den mittleren zylindrischen Teilbereich hindurch und aufgrund des andererseits vorgesehenen zylindersymmetrischen mittigen Einbaus konzentrisch zur Schachtachse, der als ein hohler Verdrängungskörper ausgebildet ist, der einen oberen sich nach unten verjüngenden Teilbereich und einen unteren Teilbereich aufweist, wird einerseits die Reibung zwischen der vertikalen Innenwand des zylindrischen Begasungsbereichs und dem Granulat stark verringert, da die Normalkraft der Granutatmasse auf die zylindrische Innenwand geringer ist als auf die konische Innenwand, und wird andererseits der Granulatstrom in seinem mittigen Bereich verlangsamt, wodurch eine Verminderung von "Kernfluss" erzielt wird, d.h. eine Verkürzung der Verweilzeit im mittigen Bereich aufgrund des uneinheitlichen Geschwindigkeitsprofils des Granulats verhindert wird.

Bei einer besonders vorteilhaften Ausführung besteht der weitere Begasungsbereich aus einem zylindermantelförmigen Spaltsieb, dessen Spalte parallel zur Zylinderachse A des Spaltsiebes verlaufen. Durch die vertikale Ausrichtung der Spalte wird die Reibung zwischen dem Granulat und der Innenwand des durch das Spaltsieb gebildeten Begasungsbereichs noch weiter verringert.

Zweckmässigerweise ist das zylindermantelförmige Spaltsieb von einem ebenfalls zylindermantelförmigen und zum Spaltsieb konzentrisch angeordneten Gehäuse umgeben, wodurch über den gesamten Umfang des zylindrischen Begasungsbereichs eine gleichförmige Begasung erfolgen kann.

Vorzugsweise ist der mittige Einbau ein Verdrängungskörper, der einen oberen Teilbereich und einen unteren Teilbereich aufweist. Insbesondere hat der Verdrängungskörper in seinem unteren Teilbereich und in seinem oberen Teilbereich jeweils mindestens eine Öffnung, und der untere Teilbereich mit seiner mindestens einen Öffnung befindet sich dabei etwa auf gleicher Höhe wie die obere Kante des Spaltsiebes. Dadurch besteht die Möglichkeit, dass ein Teil des im Begasungsbereich durch das Spaltsieb zugeführten Gases durch die untere Öffnung ins Innere des Verdrängungskörpers gelangt und sich durch den hohlen Verdrängungskörper bis zu dessen oberer Öffnung bewegt, wo es dann erneut ins Granulat abgegeben wird, diesmal aber nicht radial von aussen, wie im Bereich des Spaltsiebes, sondern radial von innen nach aussen. Dies trägt zu einer Vereinheitlichung der Begasung des Granulats bei.

Alternativ kann der Verdrängungskörper auch geschlossen sein und/oder weiter unten angeordnet sein, so dass seine Spitze ca. auf der Höhe des oberen Randes des zylinderförmigen Spaltsiebes ist.

Besonders zweckmässig ist es, wenn der zylindrische Teilbereich aus mehreren Zylindermantel-Abschnitten zusammengesetzt ist, d.h., dass das Spaltsieb z.B. aus Zylindermantel-Hälften aufgebaut ist. Dies ermöglicht eine leichte Montage und Demontage des Spaltsiebes für Reinigungs- und Wartungstätigkeiten am Auslaufkonus.

Bei einer vorteilhaften Weiterbildung der erfindungsgemässen Vorrichtung sind im Innern des oberen Bereichs weitere Einbauten angeordnet. Diese Einbauten können z.B. dachartig ausgebildet sein, wobei der First oder die Spitze der dachartigen Einbauten nach oben weisen. Diese Einbauten leisten einen Beitrag zur Vereinheitlichung des Granulat-Geschwindigkeitsprofils sowie zur Verhinderung oder zumindest Verminderung ruckartiger Bewegungen der gesamten im Schachtreaktor enthaltenen Granulatmasse (Wechselspiel aus Haftreibung und Gleitreibung, "slip-stick"). Durch die Einbauten wird einerseits die sich ruckartig bewegende Masse kleiner gehalten und andererseits der Fallweg dieser Masse verkleinert.

Weitere Vorteile, Merkmale und Anwendungsmöglichkeiten der vorliegenden Erfindung ergeben sich aus der nun folgenden Beschreibung des Standes der Technik sowie nicht einschränkend aufzufassender bevorzugter Ausführungsbeispiele der Erfindung anhand der beigefügten Zeichnung, wobei:
- Fig. 1: verschiedene Varianten des Standes der Technik zur Begasung von Schachtreaktoren zeigt;
- Fig. 2: eine weitere Variante des Standes der Technik zur Begasung des Auslaufbereichs eines Schachtreaktors zeigt;
- Fig. 3: in einer schematischen Schnittansicht ein erstes erfindungsgemässes Ausführungsbeispiel der vorliegenden Erfindung zur Begasung des Auslaufbereichs eines Schachtraktors zeigt;
- Fig. 4: in einer schematischen Schnittansicht ein zweites erfindungsgemässes Ausführungsbeispiel der vorliegenden Erfindung zur Begasung des Auslaufbereichs eines Schachtraktors zeigt
- Fig. 5: eine Perspektivansicht eines Elements der erfindungsgemässen Ausführungsbeispiele von Fig. 3 und 4 zeigt; und
- Fig. 6: eine schematische Perspektivansicht eines Teilbereichs des Elements von Fig. 5 zeigt.

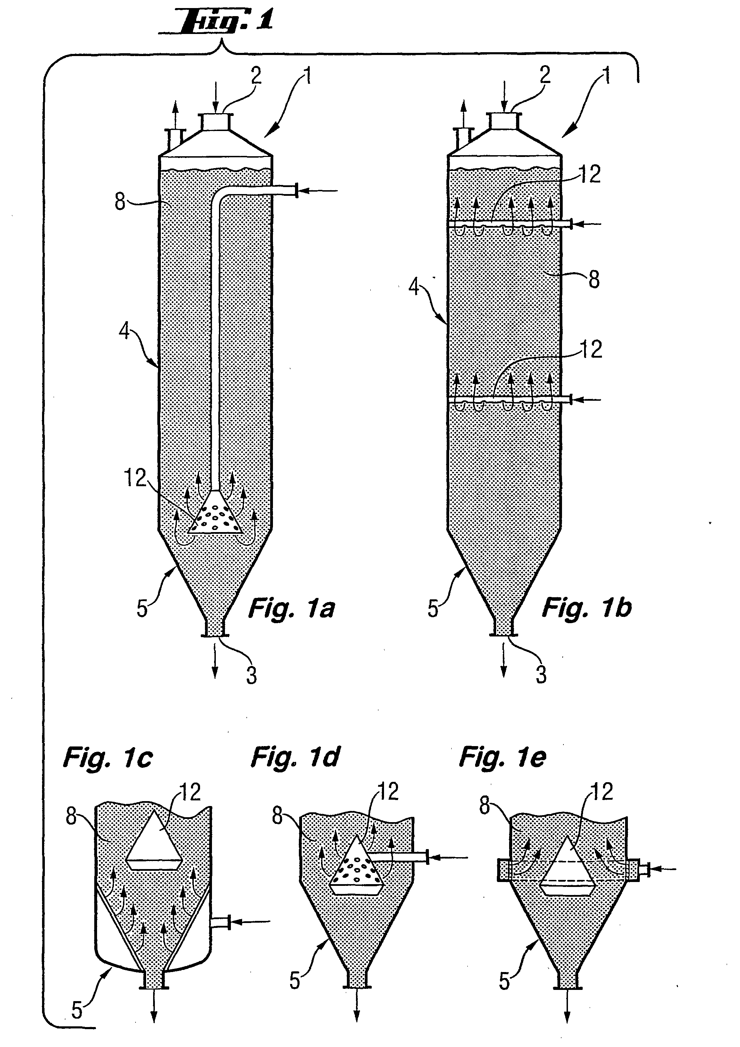

Fig. 1 zeigt einige typische Schachtreaktoren 1 des Standes der Technik. Fig. 1a zeigt einen Schachtreaktor 1, dessen Granulat 8 den oberen zylindrischen Bereich 4 sowie den konischen Auslaufbereich 5 des Reaktors ausfüllt. Die Begasung findet über einen Einbau 12 am unteren Ende des zylindrischen Bereichs 4 bzw. oberhalb des konischen Auslaufbereichs 5 des Schachtes 1 statt. Fig. 1b zeigt einen ähnlichen Schacht 1, dessen Granulat 8 über Einbauten 12 im oberen zylindrischen Bereich 4 des Schachts erfolgt, wobei sich die Einbauten 12 jeweils in einer horizontalen Ebene im Innern des Schachtes erstrecken. Fig. 1c, 1d, und 1e zeigen jeweils den konischen Auslaufbereich 5 eines Schachtes, wobei jeweils oberhalb bzw. am oberen Ende des konischen Auslaufbereichs 5 ein kegelförmiger Einbau 12 vorgesehen ist. Dieser Einbau 12 dient einerseits der Vereinheitlichung des Granulat-Geschwindigkeitsprofils im Schachtreaktor 1 (Fig. 1c, 1d und 1e) und andererseits zur Begasung des Schachtreaktors (Fig. 1d). In Fig. 1c findet die Begasung des Schachtreaktors über den kegelförmigen Mantel des konischen Auslaufbereichs 5 statt. Bei den Varianten a, b und d der Fig. 1 wird nur der Teil des Granulats 8 begast, der sich oberhalb der Einbauten 12 befindet. In all diesen Fällen findet keine Begasung des Auslaufbereichs 5 statt. Lediglich die Variante c von Fig. 1 begast das gesamte Granulat 8 des Schachtes 1. Dennoch muss bei dieser Variante c ähnlich wie bei den Varianten a und d von Fig. 1 mit einer erhöhten Reibung zwischen dem sich nach unten bewegenden Granulat 8 und den jeweils schrägen konischen Begasungsflächen gerechnet werden. Dies führt zu der eingangs erwähnten Verbreiterung des Verweilzeitspektrums des Granulats und schlimmstenfalls zu Verklumpungen durch Granulatkörner an der Begasungsfläche.

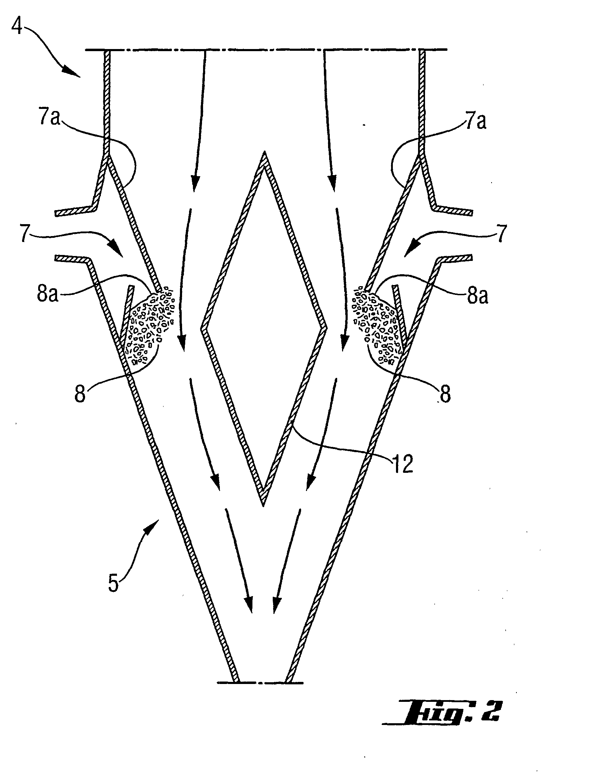

Fig. 2 zeigt eine weitere Variante zur Begasung eines Schachtreaktors unterhalb seines zylindrischen Bereichs 4. Im Innern des Auslaufbereichs 5 befindet sich ein Einbau 12, der hier als Doppelkegel ("Diamant") ausgebildet ist. Der Begasungsbereich 7 erstreckt sich in Umfangsrichtung um den oberen Teil des Auslaufbereichs 5. Der Granulatstrom, der durch die beiden durchgezogenen Pfeile angedeutet ist, bewegt sich vom oberen zylindrischen Bereich 4 des Schachtreaktors nach unten und durchläuft dabei eine Verengung, die durch den oberen Teil des Doppelkegels 12 und ein konisches Ablenkblech 7a erzeugt wird. Hinter der Unterkante des Ablenkblechs 7a bildet das Granulat 8 einen Schüttwinkel 8a, der dem durch den Begasungsbereich 7 einströmenden Gas ausgesetzt ist. Ein Nachteil dieser Begasung des konischen Auslaufbereichs 5 besteht darin, dass nur eine sehr kleine Fläche des Granulats 8 zur Begasung exponiert wird. Zur Begasung steht lediglich die durch den Schüttwinkel 8a des Granulats 8 gebildete Kegelmantelfläche zur Verfügung.

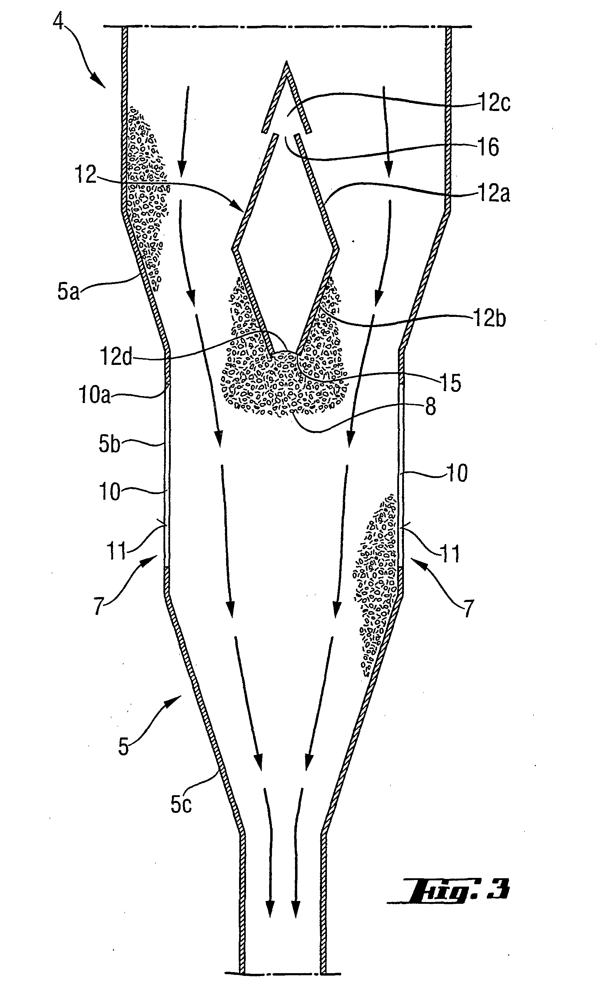

Fig. 3 zeigt ein erstes bevorzugtes Ausführungsbeispiel des erfindungsgemäss begasten Auslaufbereichs 5 eines Schachtreaktors. Das Granulat 8 bewegt sich vom oberen zylindrischen Bereich 4 in der durch die durchgezogenen Pfeile angedeuteten Richtung nach unten, wobei es sich um den mittigen Einbau 12 herum bewegt und über einen oberen konischen Teilbereich 5a des Auslaufbereichs 5 zu einem mittigen zylindrischen Teilbereich 5b und schliesslich zu einem unteren konischen Teilbereich 5c des Auslaufbereichs 5 wandert. Der mittlere zylindrische Teilbereich 5b enthält ein zylindermantelförmiges Spaltsieb 10, das den Begasungsbereich 7 bildet. Das Trocknungsgas (z.B. Luft oder vorzugsweise reiner Stickstoff) strömt durch das Spaltsieb 10 radial von aussen nach innen in den mittleren zylindrischen Teilbereich 5b ein und bewegt sich gegen den Granulatstrom nach oben. Ein Teil des durch das Granulat nach oben strömenden Gases gelangt über die Granulatoberfläche 12d durch eine Öffnung 15 am unteren Ende des Einbaus 12 ins Innere dieses Einbaus, um schliesslich durch eine obere Öffnung 16 des Einbaus 12, die durch eine oben spitze Haube 12c abgedeckt ist, wieder in den Granulatstrom zurückkehrt. Diesmal bewegt sich aber das Gas radial von innen nach aussen, was zu einer Vergleichmässigung der Begasung beiträgt.

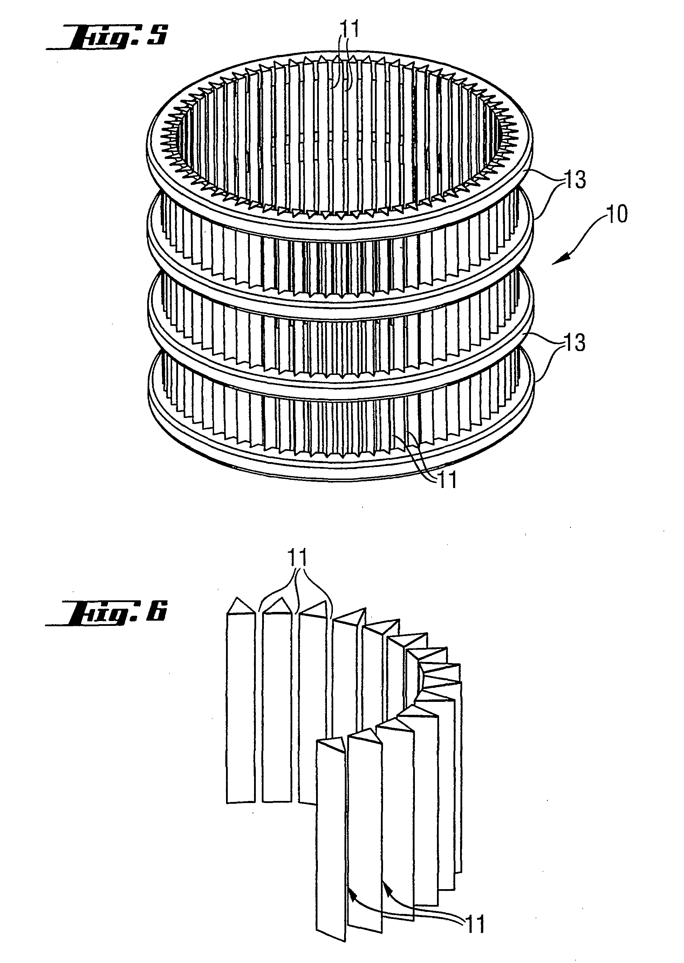

Im Gegensatz zum Stand der Technik befinden sich keinerlei Perforationen oder irgendwelche Begasungsspalte an nicht vertikalen Flächen des Schachtreaktors. Begast wird lediglich im Begasungsbereich 7, der durch vertikal und zylindermantelförmig angeordnete Spalte 17 gebildet wird. Da die Spalte 11 (siehe Fig. 5) alle lotrecht angeordnet sind, wird jegliche Reibung zwischen dem Granulat und dem Begasungsbereich 7 minimiert.

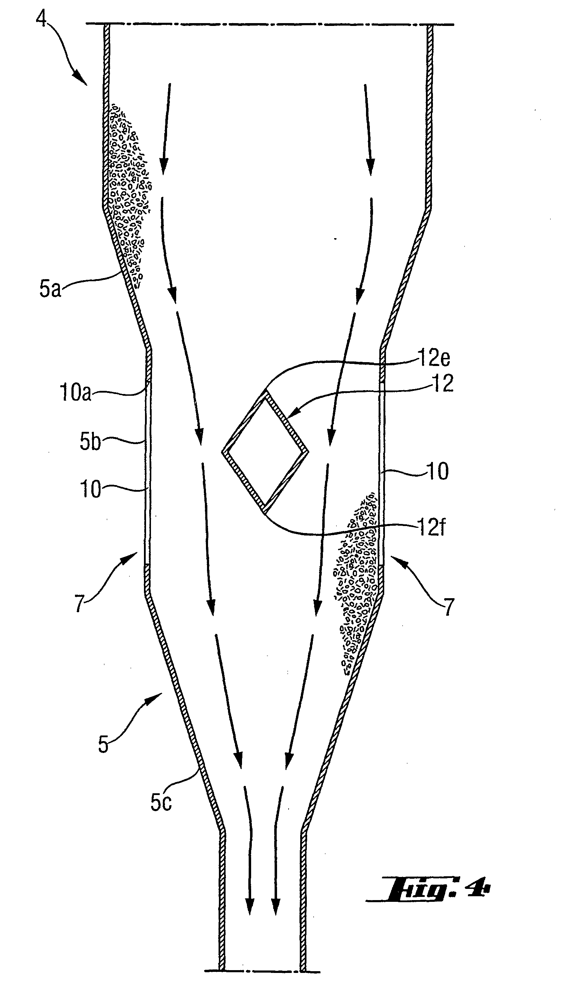

Fig. 4 zeigt ein zweites bevorzugtes Ausführungsbeispiel des erfindungsgemäss begasten Auslaufbereichs 5 eines Schachtreaktors. Die aüssere Hülle des Auslaufbereichs 5 ist genauso ausgebildet wie bei dem ersten Ausführungsbeispiel, d.h. sie besteht aus einem oberen konischen Teilbereich 5a, einem mittleren zylindrischen Teilbereich 5b, der im wesentlichen aus dem Spaltsieb 10 besteht, und einem unteren konsichen Teilbereich 5c. Bei diesem zweiten Ausführungsbeispiel ist jedoch der als Verdrängungskörper wirkende mittige Einbau 12 ein geschlossener Hohlkörper in Form eines nach oben und unten hin spitzen Doppelkegels oder Oktaeders ("Diamant"). Vorzugsweise ist er in einer deratigen Höhe im Innern des Schachtauslaufs 5 angeordnet, dass sich seine obere Spitze 12e ungefähr auf derselben Höhe wie der obere Rand 10a des Spaltsiebes 10 befindet.

Zweckmässigerweise befindet sich um das zylindermantelförmige Spaltsieb 10 herum ein ebenfalls zylindermantelförmiges und zum Spaltsieb 10 konzentrisch angeordnetes Gehäuse (nicht gezeigt), um eine gleichmässige Verteilung des Gases im Begasungsbereich 7 zu erreichen.

Fig. 5 ist eine Perspektivansicht des Spaltsiebs 10 in dem erfindungsgemässen Schachtreaktor. Der Zylinder wird aus Sieben hergestellt, die zu einem Zylinder gerollt und an der Stossnaht verschweisst werden. Die glatte Profiloberfläche zeigt nach innen (siehe Fig. 5), während die spitze Seite der Profile nach aussen weist. Die Stützprofile 13 liegen aussen als Ringe am Gitter an.

Fig. 6 zeigt einen Ausschnitt des zylindrischen Spaltsiebs von Fig. 5. Die einzelnen Spaltsiebstäbe 11 liegen mit ihrer glatten Fläche innen, während ihre spitze Seite nach aussen weist. Diese Konfiguration eignet sich für einen Begasungsstrom von aussen nach innen und ermöglicht eine seitliche, radial nach innen weisende Begasung, wobei gleichzeitig der Widerstand für das zwischen den Spaltsiebstäben 11 einströmende Gas und der Widerstand für das an den glatten Flächen der Spaltsiebstäbe 11 entlang gleitende Granulat minimiert wird.

Man erkannt, dass im Rahmen der vorliegenden Erfindung die Begasungsflächen vorwiegend in senkrecht angeordneten Bereichen der Wände des Schachtauslaufes liegen.

Die Erfindung ist auch keineswegs auf die beiden beschriebenen und abgebildeten Ausführungsbeispiele begrenzt. So ist z.B. bei Bedarf eine Auslaufgeometrie denkbar, bei der nicht nur ein zylindrischer Begasunsgbereich 5b zwischen konischen Teilbereichen 5a, 5c angeordnet ist, sondern mehrere zylindrische Begasunsgbereiche in dem insgesamt vorwiegend konischen Auslaufbereich 5 integriert sind. Eine typische Anordnung wäre z.B. von oben nach unten der Reihe nach und mit abnehmendem Durchmesser: konisch, zylindrisch mit Begasung, konisch, zylindrisch mit Begasung, konisch.

### Bezugszeichenliste

- 1: Schacht / Schachtreaktor
- 2: Einfüllöffnung
- 3: Auslauföffnung
- 4: zylindrischer Bereich
- 5: Auslaufbereich
- 5a: oberer konischer Teilbereich
- 5b: mittlerer zylindrischer Teilbereich
- 5c: unterer konischer Teilbereich
- 6: Begasunsgbereich
- 7: Begasungsbereich
- 7a: Ablenkblech des Begasungsbereichs
- 8: Granulat
- 8a: Schüttkegel des Granulates
- 10: Spaltsieb
- 10a: oberer Rand des Spaltsiebes
- 11: Spaltsiebstab
- 12: mittiger Einbau
- 12a: oberer Teilbereich des Einbaus
- 12b: unterer Teilbereich des Einbaus
- 12c: Haube
- 12d: Granulatoberfläche
- 12e: obere Spitze
- 12f: untere Spitze
- 13: Stützprofil
- 15: untere Öffnung
- 16: obere Öffnung

## Patentansprüche

1. Vorrichtung zum thermischen Behandeln oder Nachbehandeln von Kunststoffmaterial, insbesondere von Polyestermaterial wie Polyethylen-Terephthalat (PET), mit einem vertikalen Schacht (1), der eine obere Einfüllöffnung (2) und eine untere Auslauföffnung (3) hat und in dem das Granulat von oben nach unten in vertikaler Richtung geführt wird, wobei der Schacht (1) einen oberen zylindrischen Bereich (4) sowie einen sich daran anschliessenden und nach unten verjüngenden unteren konischen Auslaufbereich (5) aufweist, dergestalt, dass der im wesentlichen konische Auslaufbereich (5) aus einem oberen konischen Teilbereich (5a), einem mittleren zylindrischen Teilbereich (5b) und einem unteren konischen Teilbereich (5c) besteht, die aneinander grenzen, wobei der mittlere zylindrische Teilbereich (5b) einen weiteren Begasungsbereich (7) zur Begasung des Granulats bildet, **dadurch gekennzeichnet, dass** im Auslaufbereich (5) ein zylindersymmetrischer mittiger Einbau (12) vorgesehen ist, der konzentrisch zur Schachtachse angeordnet ist und als ein hohler Verdrängungskörper ausgebildet ist, der einen oberen sich nach oben verjüngenden Teilbereich (12a) und einen unteren Teilbereich (12b) aufweist.

2. Vorrichtung nach Anspruch 1, **dadurch gekennzeichnet, dass** der weitere Begasungsbereich (7) aus einem zylindermantelförmigen Spaltsieb (10) besteht, dessen Spalte parallel zur Zylinderachse des Spaltsiebes verlaufen.

3. Vorrichtung nach Anspruch 2, **dadurch gekennzeichnet, dass** das zylindermantelförmige Spaltsieb (10) von einem ebenfalls zylindermantelförmigen und zum Spaltsieb konzentrisch angeordneten Gehäuse umgeben ist.

4. Vorrichtung nach einem der Ansprüche 1 bis 3, **dadurch gekennzeichnet, dass** der Verdrängungskörper (12) in seinem unteren Teilbereich (12b) und in seinem oberen Teilbereich (12a) jeweils mindestens eine Öffnung (15 bzw. 16) hat und wobei der untere Teilbereich (12b) mit seiner mindestens einen Öffnung (15) sich etwa auf gleicher Höhe wie die obere Kante (10a) des Spaltsiebes (10) befindet.

5. Vorrichtung nach einem der Ansprüche 1 bis 3, **dadurch gekennzeichnet, dass** der mittige Einbau (12) als Verdrängungskörper in Form eines Doppelkegels oder eines Polyeders vorgesehen ist, bei dem eine Spitze (12e) nach oben und eine Spitze (12f) nach unten weist.

6. Vorrichtung nach Anspruch 5, **dadurch gekennzeichnet, dass** der Verdrängungskörper (12) innen hohl ist und keine Öffnungen aufweist.

7. Vorrichtung nach Anspruch 6, **dadurch gekennzeichnet, dass** sich die obere Spitze (12e) des Verdrängungskörpers (12) etwa auf gleicher Höhe wie der obere Rand (10a) des Spaltsiebes (10) befindet.

8. Vorrichtung nach einem der vorhergehenden Ansprüche, **dadurch gekennzeichnet, dass** sie im oberen Bereich (4) einen weiteren Begasungsbereich (6) zur Begasung des Granulats enthält.

9. Vorrichtung nach einem der vorhergehenden Ansprüche, **dadurch gekennzeichnet, dass** der konische Auslaufbereich (5) aus mehreren von oben nach unten der Reihe nach angeordneten, abwechselnd aufeinanderfolgenden konischen und zylindrischen Teilbereichen mit von oben nach unten abnehmendem Durchmesser besteht.

10. Vorrichtung nach einem der vorhergehenden Ansprüche, **dadurch gekennzeichnet, dass** im Innern des oberen Bereichs (4) weitere Einbauten angeordnet sind.

11. Vorrichtung nach Anspruch 10, **dadurch gekennzeichnet, dass** die Einbauten des oberen Bereichs (4) dachartig ausgebildet sind, wobei der First oder die Spitze der dachartigen Einbauten nach oben weist.

12. Vorrichtung nach einem der vorhergehenden Ansprüche, **dadurch gekennzeichnet, dass** im Innern des oberen Bereichs (4) weitere Einbauten angeordnet sind.

13. Vorrichtung nach Anspruch 12, **dadurch gekennzeichnet, dass** die Einbauten des oberen Bereichs (4) dachartig ausgebildet sind, wobei der First oder die Spitze der dachartigen Einbauten nach oben weist.

## Claims

1. A device for thermal treatment or post-treatment of synthetic material, in particular polyester material such as polyethylene terephthalate (PET), with a vertical shaft (1), which has an upper filling opening (2) and a lower discharge opening (3) and into which the granulate is introduced from top to bottom in a vertical direction, whereby the shaft (1) has an upper cylindrical area (4) as well as a lower conical discharge area (5) connected thereto and tapering downwards, such that the substantially conical discharge area (5) comprises an upper conical partial area (5a), a middle cylindrical partial area (5b) and a lower conical partial area (5c), which adjoin one another, whereby the middle cylindrical partial area (5b) forms another gassing area (7) for gassing the granulate, **characterised in that** provided in the discharge area (5) is a cylindrical symmetrical middle baffle (12), which is arranged concentrically to the shaft axis and is designed as a hollow displacement body, which has an upper partial area (12a) tapering upwards and a lower partial area (12b).

2. The device as claimed in Claim 1, **characterised in that** the other gassing area (7) comprises a cylinder jacket-shaped slotted hole screen (10), whereof the gaps run parallel to the cylinder axis of the slotted hole screen.

3. The device as claimed in Claim 2, **characterised in that** the cylinder jacket-shaped slotted hole screen (10) is enclosed by a housing likewise cylinder jacket-shaped and arranged concentrically to the slotted hole screen.

4. The device as claimed in any one of Claims 1 to 3, **characterised in that** the displacement element (12) in its lower partial area (12b) and in its upper partial area (12a) in each case has at least one opening (15 or 16) and whereby the lower partial area (12b) with its at least one opening (15) is situated approximately at the same level as the upper edge (10a) of the slotted hole screen (10).

5. The device as claimed in any one of Claims 1 to 3, **characterised in that** the middle baffle (12) is provided as a displacement element in the form of a double cone or a polyhedron, in which one tip (12e) points upwards and one tip (12f) points downwards.

6. The device as claimed in Claim 5, **characterised in that** the displacement element (12) in its lower partial area (12b) and in its upper partial area (12a) in each case has at least one opening (15 or 16) and whereby the lower partial area (12b) with its at least one opening (15) is situated approximately at the same level as the upper edge (10a) of the slotted hole screen (10).

7. The device as claimed in any one of Claims 1 to 3, **characterised in that** a middle baffle (12) is provided as displacement element in the form of a double cone or a polyhedron, in which one tip (12e) points upwards and one tip (12f) points downwards.

8. The device as claimed in Claim 7, **characterised in that** the displacement element (12) is hollow inside and has no openings.

9. The device as claimed in Claim 8, **characterised in that** the upper tip (12e) of the displacement element (12) is situated approximately at the same level as the upper edge (10a) of the slotted hole screen (10).

10. The device as claimed in any one of the foregoing claims, **characterised in that** in the upper area (4) it contains a further gassing area (6) for gassing of the granulate.

11. The device as claimed in any one of the foregoing claims, **characterised in that** the conical discharge area (5) comprises several conical and cylindrical partial areas with their diameter decreasing from top to bottom arranged alternately successively in series from top to bottom.

12. The device as claimed in any one of the foregoing claims, **characterised in that** further baffles are arranged inside the upper area (4).

13. The device as claimed in Claim 12, **characterised in that** the baffles of the upper area (4) are designed in the shape of a roof, whereby the ridge or the tip of the roof-like baffles points upwards.

## Revendications

1. Dispositif de traitement ou retraitement thermique de matériau de matière plastique, notamment de matière de polyester comme du téréphtalate de polyéthylène (PET), comportant un puits vertical (1) qui a une ouverture de remplissage supérieure (2) et une ouverture de sortie inférieure (3) et dans lequel le granulat est guidé du haut vers le bas dans le sens vertical, le puits (1) présentant une zone supérieure cylindrique (4) ainsi qu'une zone de sortie (5) s'y raccordant et se rétrécissant vers le bas, de manière à ce que la zone de sortie (5) sensiblement conique consiste en une zone partielle supérieure conique (5a), une zone centrale cylindrique (5b) et une zone inférieure conique (5c) qui sont contiguës, la zone partielle centrale cylindrique (5b) formant une autre zone de gazage (7) pour le gazage du granulat, **caractérisé en ce qu'**il est prévu dans la zone de sortie (5) une pièce encastrée centrale symétrique au cylindre (12), qui est disposée concentriquement par rapport à l'axe du puits et se présente sous forme d'un corps de refoulement creux, qui présente une zone partielle (12a) se rétrécissant vers le haut et une zone partielle inférieure (12b).

2. Dispositif selon la revendication 1, **caractérisé en ce que** l'autre zone de gazage (7) consiste en un crible à fentes en forme de chemise cylindrique (10) dont les fentes s'étendent parallèlement à l'axe du cylindre du crible à fentes.

3. Dispositif selon la revendication 2, **caractérisé en ce que** le crible à fentes en forme de chemise cylindrique (10) est entouré par une enceinte également en forme de chemise cylindrique et disposée concentriquement par rapport au crible à fentes.

4. Dispositif selon l'une quelconque des revendications 1 à 3, **caractérisé en ce que** le corps de refoulement (12) a dans sa zone partielle inférieure (12b) et sa zone partielle supérieure (12a) respectivement au moins une ouverture (15 ou 16), et la zone partielle inférieure (12b) avec son au moins une ouverture (15) se trouvant approximativement à la même hauteur que le bord supérieur (10a) du crible à fentes (10).

5. Dispositif selon l'une quelconque des revendications 1 à 3, **caractérisé en ce que** la pièce encastrée centrale (12) est prévue en tant que corps de refoulement sous forme d'un double cône ou d'un polyèdre dans lequel une pointe (12e) est tournée vers le haut et une pointe (12f) vers le bas.

6. Dispositif selon la revendication 5, **caractérisé en ce que** le corps de refoulement (12) a, dans sa zone partielle inférieure (12b) et dans sa zone partielle supérieure (12a) respectivement au moins une ouverture (15 ou 16) et la zone partielle inférieure (12b) se trouvant avec son au moins une ouverture (15) approximativement à la même hauteur que le bord supérieur (10a) du crible à fentes (10).

7. Dispositif selon l'une quelconque des revendications 1 à 3, **caractérisé en ce qu'**une pièce encastrée centrale (12) servant de corps de refoulement (12) est prévue sous forme d'un double cône ou d'un polyèdre dans lequel une pointe (12e) est tournée vers le haut et une pointe (12f) vers le bas.

8. Dispositif selon la revendication 7, **caractérisé en ce que** le corps de refoulement (12) est creux à l'intérieur et ne présente pas d'ouvertures.

9. Dispositif selon la revendication 8, **caractérisé en ce que** la pointe supérieure (12e) du corps de refoulement (12) se trouve approximativement à la même hauteur que le bord supérieur (10a) du crible à fentes (10).

10. Dispositif selon l'une quelconque des revendications précédentes, **caractérisé en ce qu'**il comporte dans sa zone supérieure (4) une autre zone de gazage (6) pour le gazage du granulat.

11. Dispositif selon l'une quelconque des revendications précédentes, **caractérisé en ce que** la zone de sortie conique (5) consiste en plusieurs zones partielles coniques et cylindriques disposées en série du haut vers le bas se succédant alternativement, d'un diamètre décroissant du haut vers le bas.

12. Dispositif selon l'une quelconque des revendications précédentes, caractérisé en ce d'autres pièces encastrées sont disposées à l'intérieur de la zone supérieure (4).

13. Dispositif selon la revendication 12, **caractérisé en ce que** les pièces encastrées de la zone supérieure (4) sont conçues semblables à des toits, le faîte ou la pointe des pièces encastrées semblables à des toits étant tourné vers le haut.
